# EUROPEAN PATENT APPLICATION

(11) **EP 4 203 261 A1**
(43) Date of publication of application: **28.06.2023**
(21) Application number: 21217498.1
(22) Date of filing: 23.12.2021
(51) Int. Cl.: H02K 3/487

(54) **GUIDED WEDGE ELEMENT FOR AN ELECTRIC EXCITED ROTOR**

(71) Applicant: Valeo eAutomotive Germany GmbH, 91056 Erlangen (DE)
(72) Inventor: WIECZOREK, Christoph, 97616 Bad Neustadt a.d.Saale (DE); ENGLERT, Christoph, 97616 Bad Neustadt a.d.Saale (DE); VOLKMUTH, Florian, 97616 Bad Neustadt a.d.Saale (DE); SEUBERT, Nikolas, 97616 Bad Neustadt a.d.Saale (DE); BEETZ, Sebastian, 97616 Bad Neustadt a.d.Saale (DE); FÖRSTER, David, 97616 Bad Neustadt a.d.Saale (DE)
(74) Representative: Valeo Powertrain Systems

(57) **Abstract**

The invention concerns a rotor comprising a rotor shaft, a rotor body formed of a stack of laminations having a plurality of teeth (21) projecting radially, a field coil (3) wound around each tooth of the plurality of teeth (21), a plurality of wedge elements (110) each wedge element (110) of the plurality of wedge elements (110) being configured to be slid into corresponding grooves (210) provided in the bulk of each of the respective two adjacent teeth.

## Description

### FIELD OF THE INVENTION

The present invention belongs to the field of rotary electric machines configured to be on board of an automotive vehicle, such as an electric vehicle (EV) or a hybrid vehicle (HV).

The present invention relates in particular to the field of electric excited rotors, also called wound rotors or slip ring rotors, integrated to rotary electric machines.

### BACKGROUND OF THE INVENTION

As is known, an electric or a hybrid automotive vehicle presents an electric drive comprising a rotary electric machine which need to be supplied with electric power, for instance by a high voltage power supply battery, to deliver a mechanical power in order to ensure the propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, notably the wheels of the vehicle.

In particular, it is known to have the rotor electric excited. This type of rotors is commonly referred as wound rotors or slip ring rotors. Such a rotor comprises a rotor body, which may also be referenced as a rotor package, formed of a stack of laminations having a plurality of teeth projecting radially, and a field coil wound around the plurality of teeth. Then, the field coil is connected to an external power supply through slip rings. The slip rings correspond to electro-mechanical devices configured to allow the exchange of electric power between the field coil, which rotates with the rotor, and the external power supply, which is fixed.

However, in the context of the rotary electric machine for the electric or hybrid vehicles, the rotor is designed to rotate at high speeds, which may affect the holding of the field coil due to centrifugal forces. This may weaken the electrical insulation of the field coil, and even lead, in most extreme cases, to short-circuits or to a break of a tooth. A conventional solution to fix the field coil is to mount end caps on both axial ends of the rotor body and impregnate the field coil with resin.

In this context, the main objective of the present invention is to provide a rotor with wedge elements for ensuring the fixation of the field coil, which is easier to produce. According to the invention, the wedge elements have to be as space-saving as possible between adjacent teeth.

### SUMMARY OF THE INVENTION

More precisely, the present invention concerns a rotor for a rotary electric machine, the rotor comprising a rotor shaft configured to rotate around an axis of rotation, a rotor body formed of a stack of laminations having a plurality of teeth projecting radially, and a field coil wound around each tooth of the plurality of teeth. The rotor body is mounted coaxially on the rotor shaft. The rotor further comprises a plurality of wedge elements extending axially and arranged in slots corresponding to space between two adjacent teeth of the plurality of teeth. Each wedge element of the plurality of wedge elements having two lateral edges and each tooth of the plurality of teeth has an axial length and comprises lateral grooves provided in the bulk of lateral end portions all along its axial length. Each wedge element of the plurality of wedge elements is configured to be slid into the corresponding grooves provided in the bulk of each of the respective two adjacent teeth.

The present invention provides thus the substantial gain of allowing to ensure a sealing of the wedge elements with the rotor body so that to facilitate the injection process of the potting material, notably by limiting potential leaks of the potting material, without occupying much space between adjacent teeth. In a nutshell, the invention provides a solution for the insulation and the mechanical holding of the field coil while facilitating the manufacturing of the rotor.

According to an embodiment of the invention, the grooves provided in the bulk of both lateral end portions of each tooth and the edges of each wedge element have complementary circular sections. Other shapes are possible as well.

According to an embodiment of the invention, the rotor comprises a potting material which fills a space comprised between the shaft, the field coil and the plurality of wedge elements.

According to an embodiment of the invention, each wedge element of the plurality of wedge elements has substantially a triangle or trapezoidal cross section with a corner portion of the corresponding wedge element being directed towards the axis of rotation. Other shapes are possible as well.

Advantageously, in a configuration in which the potting material fills the slots, the corner portion of the corresponding wedge element is configured to ensure a substantially constant thickness of the potting filling material above the field coil.

Advantageously, the plurality of wedge elements is made out of an insulation material, for instance a plastic material. Thus, the wedge elements electrically insulate the field coil from the rotor body.

Advantageously, the rotor comprises two end caps coming against two axial ends of the rotor body, the two end caps being configured to cover coil ends of the field coil and to be sealed with the rotor body.

According to an aspect of the invention, the invention relates to the rotary electric machine comprising the rotor as described previously and a stator.

Another aspect of the invention is the electric drive, comprising the rotary electric machine and an inverter configured to convert a direct current voltage coming from a high-voltage power supply battery into an alternating current voltage so as to supply the stator of the rotary electric machine with the AC voltage. The AC voltage may be a multiphase AC voltage, especially a three-phase voltage. The rotor is advantageously supplied with a DC voltage. Preferably, a unique power converter is used for supplying both the AC voltage to the stator and the DC voltage to the rotor.

A further aspect of the invention is an electric of a hybrid vehicle, comprising the electric drive for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of a view of an example of a rotor according to an embodiment of the invention;
Figure 2 is a schematic diagram of a partial cut view of an example of the rotor comprising an example of wedge element according to an embodiment of the invention;
Figure 3 is a schematic diagram of a partial view of an example of the rotor comprising another example of wedge element according to an embodiment of the invention;
Figure 4 is a schematic diagram of an automotive electric or hybrid vehicle comprising the rotor of a rotary electric machine according to an embodiment of the invention.

### DETAILED DESCRIPTION

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

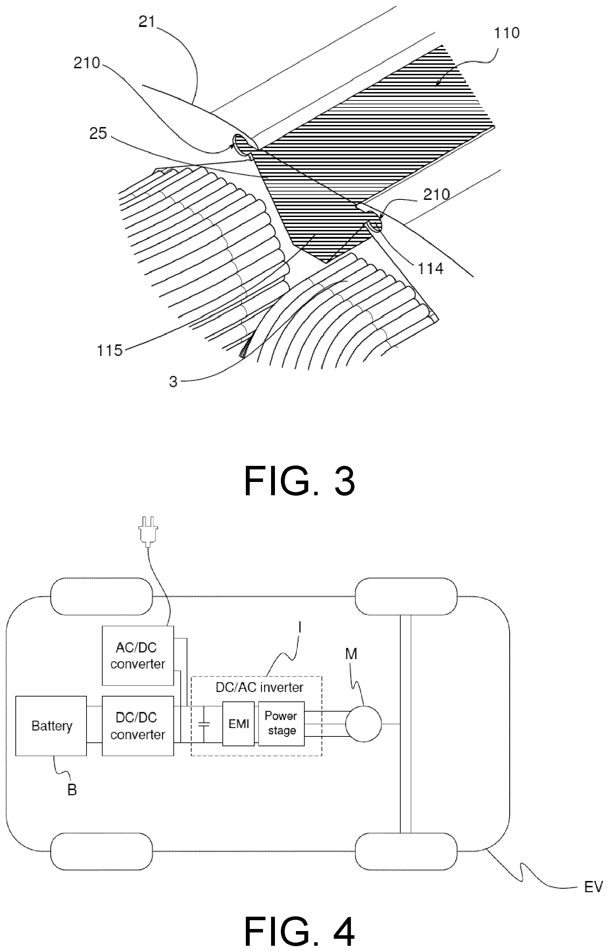

In reference to Figure 4, an aspect of the invention is an electric vehicle or a hybrid electric automotive vehicle EV comprising wheels and an electric drive configured to drive at least indirectly at least one of the wheels of the vehicle. The vehicle may comprise a high-voltage power supply battery B, preferably a rechargeable battery, for providing electric power to the electric drive. Although, the invention is not limited to this domain.

Another aspect of the invention is the electric drive comprising a rotary electric machine M and an inverter I configured to convert a direct current (DC) voltage coming from the high-voltage power supply battery B into an alternating current (AC) voltage in order to supply the stator of the rotary electric machine M with AC voltage. The rotary electric machine M may in particular be a three-phase rotary electric machine supplied with a three-phase AC voltage. The rotor is advantageously supplied with a DC voltage. Preferably, a unique power converter is used for supplying both the AC voltage to the stator and the DC voltage to the rotor.

The invention also relates to the rotary electric machine comprising a stator, referring to a fixed part of the rotary electric machine, and a rotor, referring to a rotating part of the rotary electric machine. The rotor 1 is, in particular, an electric excited rotor, also commonly referred as a wound rotor or a slip ring rotor. More precisely, the stator presents an annular shape and surrounds coaxially the rotor. Then, the rotary electric machine comprises a casing covering both the stator and the rotor. Ordinarily, the stator comprises a stator body formed of a stack of stator laminations having a plurality of stator teeth projecting radially, and stator windings wound around the stator teeth.

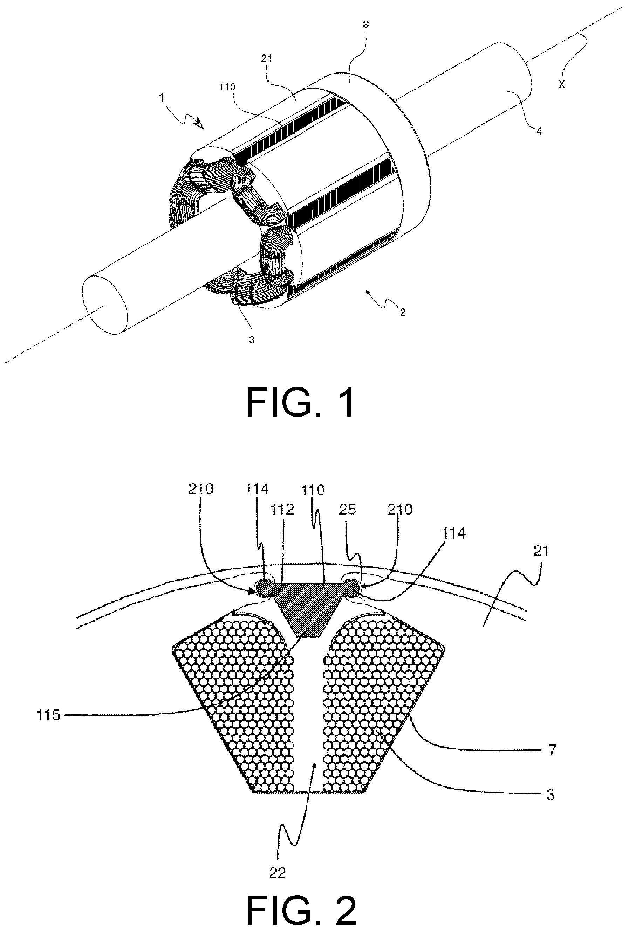

Figure 1 discloses a partial view of an example of the rotor 1 according to a further aspect of the invention. The rotor 1 comprises a rotor shaft 4 configured to rotate around an axis X of rotation, a rotor body 2 formed of a stack of laminations having a plurality of teeth 21 projecting radially, and at least one field coil 3 wound around each tooth of the plurality of teeth 21. The plurality of teeth 21 may notably comprise four, six, or eight teeth for example. The laminations are especially stacked along the axis of rotation. The rotor body 2 is configured to be mounted coaxially on the rotor shaft 4, for instance the rotor body 2 may be press-fitted on the rotor shaft 4.

The field coil 3 is in particular connected to an external power supply through at least one slip ring (not represented in the drawings) mounted on the rotor shaft 4, namely on an axial end of the rotor shaft 4. The slip rings correspond to electro-mechanical devices configured to allow the exchange of electric power between a rotating element and a fixed element, here respectively the field coil and the external power supply. The rotor 1 may further comprise a holder such that the at least one slip ring is mounted on the rotor shaft 4 through the holder.

Figure 2 illustrates a partial cut view of an example of the rotor. The field coil 3 notably passes through slots 22 corresponding to space between two adjacent teeth of the plurality of teeth 21, and forms coil ends projecting axially from respectively two axial ends of the rotor body 2. The rotor may also present an insulation system 7 arranged on walls of the slots 22 between the rotor body 2 and the field coil 3 such that to electrically insulate the rotor body 2 from the field coil 3, for instance the insulation system 7 may be an insulation paper.

The rotor 1 may further comprise two end plates (not represented in the drawings), configured to come respectively against the two axial ends of the rotor body 2. The two end plates may present an annular shape, substantially similar to the shape of the two axial ends of the rotor body 2 such that to cover the two axial ends. Then, the field coil 3 advantageously may pass over the two end plates. In other words, the two end plates shall be located between the rotor body 2 and the coil ends of the field coil 3 such that to provide a mechanical holding of the stack of laminations and to electrically insulate axially the field coil 3 from the rotor body 2.

The rotor 1 further comprises a plurality of wedge elements 110 extending axially and arranged in the slots. In other words, each wedge element 110 is placed between the corresponding two adjacent teeth of the plurality of teeth.

Furthermore, as illustrated in Figure 1, the rotor 1 advantageously comprises two end caps 8 coming against the two axial ends of the rotor body 2, the two end caps 8 being configured to cover the coil ends of the field coil 3. Only one end cap is represented in the Figure 1 in order to provide an open view on the coil ends of the field coil on one side of the rotor 1.

Then, the slots 22, closed radially by the wedge elements 110 and axially by the two end caps 8, are notably filled with a potting material, for instance a resin, such that to fix the field coil. Advantageously, the wedge elements 110 and the two end caps 8 are configured to be sealed with the rotor body such that to ease the injection process of the potting material. In addition, the wedge elements 110 contribute to enhance the mechanical support of the field coil for an improved resistance to centrifugal forces. The two end caps 8 provide in a similar manner the advantage of enhancing the mechanical holding of the rotor body. The field coil 3 is thus prevented from moving due to centrifugal forces during in-service life of the rotor, especially when the rotor rotates at a high speed.

In particular, the two end caps 8 may have bores to enable the injection of the potting material through the bores of one of the two end caps, and to let air out on the bores of another one of the two end caps. An air vacuum system may be arranged on the other one of the two end caps to assist the injection process of the potting material.

Moreover, the wedge elements 110 are notably configured to be mounted on the rotor body 2 after the winding of the field coil 3 around the plurality of teeth and before the injection of the potting material through the slots. More specifically, the wedge elements are inserted axially between adjacent teeth of the plurality of teeth. I n particular, the wedge elements 110 are not only used for the injection of the potting material but are kept afterwards for the in-service life of the rotor.

The plurality of wedge elements 110 is advantageously made out of an insulation material, for instance a plastic material. Thus, the wedge elements 110 electrically insulate the field coil 3 from the rotor body 2. The wedge elements110 also imply a limited mass increase of the rotor body 2 compared to a solution where heads of the teeth are closer to one another.

Figures 2 and 3 illustrate partial views of two exemplary embodiments of the rotor according to the invention zoomed on a wedge element of the plurality of wedge elements 110. Each wedge element of the plurality of wedge elements 110 has two lateral edges 114 configured to be axially inserted in corresponding grooves 210 provided in the lamination stack. The grooves 210 are realized in the bulk of respective lateral end portions 25 of each tooth 21. The grooves 210 are therefore created in the bulk of the lamination stack of each tooth, all along the axial length of both of its lateral end portions 25.

In a nutshell, the invention provides a solution for the insulation and the mechanical holding of the field coil 3 while facilitating the manufacturing of the rotor.

It must be noted that the edges 114 of the wedge elements 110 are slid into the grooves 210 of adjacent teeth, like in channels. This way, the wedge elements are guided all along the two adjacent teeth between which they are respectively inserted. Thus, the wedge elements 110 assume their functions, e.g., improving a mechanical support of the field coil and insulating the coil when made of insulating material, without occupying much of the space corresponding to the slots 22. In this way, it is possible to take benefit of the space saved for example for incorporating more copper. In other words, thanks to the wedge elements 110 which are slid through their edges into channels made in the bulk of the lamination stack of adjacent teeth, it is possible to wound more windings around each tooth.

Preferably, the grooves 210 provided in the bulk of both lateral end portions of each tooth and the edges of each wedge element 110 have complementary circular sections. This allows to improve both the insertion of the edge 114 of the wedge elements 110 in the grooves 210, during assembly of the rotor 2, and the retention of the wedge elements 110 between the adjacent teeth in a flexible manner. Regarding the shape of the section of the grooves 210 and of the edges 114, it may however be different from the circular section represented in the drawings. The embodiment according to which the complementary sections of the grooves and of the edges, respectively, are of circular shape is provided only for illustration.

In an embodiment of the invention, each wedge element of the plurality of wedge elements 110 has substantially a triangle or trapezoidal cross section with a corner portion 115 of the corresponding wedge element being directed towards the axis X of rotation. Regarding the cross-section of the wedge element, however, other shapes also possible as well.

Then, the corner portion 115 of the corresponding wedge element 110 is advantageously configured to ensure a substantially constant thickness of potting material above the field coil 3. Moreover, the triangle or trapezoidal cross section allows to ease the injection process of the potting material.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A rotor (1) for a rotary electric machine (M), the rotor (1) comprising:
- a rotor shaft (4) configured to rotate around an axis (X) of rotation;
- a rotor body (2) formed of a stack of laminations having a plurality of teeth (21) projecting radially, the rotor body (2) being mounted coaxially on the rotor shaft (4);
- a field coil (3) wound around each tooth of the plurality of teeth (21);
- a plurality of wedge elements (110) extending axially and arranged in slots (22) corresponding to space between two adjacent teeth of the plurality of teeth (21), each wedge element of the plurality of wedge elements (110) having two lateral edges (114);
- each tooth of the plurality of teeth (21) having an axial length and comprising lateral grooves (210) provided in the bulk of lateral end portions (25) all along its axial length;
each wedge element (110) of the plurality of wedge elements (110) being configured to be slid into the corresponding grooves (210) provided in the bulk of each of the respective two adjacent teeth.

2. The rotor (1) as claimed in claim 1, wherein the grooves (210) provided in the bulk of both lateral end portions (25) of each tooth and the edges (114) of each wedge element (110) have complementary circular sections.

3. The rotor (1) as claimed in any of the preceding claims, comprising a potting material which fills a space comprised between the shaft (4), the field coil (3) and the plurality of wedge elements (110).

4. The rotor (1) as claimed in any of the preceding claims, wherein each wedge element of the plurality of wedge elements (110) has substantially a triangle or trapezoidal cross section with a corner portion (115) of the corresponding wedge element being directed towards the axis (X) of rotation.

5. The rotor (1) as claimed in any of the preceding claims combined with claim 4, wherein the corner portion (115) of the corresponding wedge element is configured to ensure a substantially constant thickness of the potting material above the field coil (3).

6. The rotor (1) as claimed in any of the preceding claims, wherein the plurality of wedge elements (110) is made out of an insulation material.

7. The rotor (1) as claimed in any of the preceding claims, wherein the rotor (1) comprises two end caps (8) coming against two axial ends of the rotor body (2), the two end caps (8) being configured to cover coil ends of the field coil (3) and to be sealed with the rotor body (2).

8. A rotary electric machine (M) for an electric or a hybrid vehicle (EV), the rotary electric machine (M) comprising the rotor (1) according to any of the preceding claims.
